# EUROPEAN PATENT APPLICATION

(11) **EP 2 464 149 A1**
(43) Date of publication of application: **13.06.2012**
(21) Application number: 10194015.3
(22) Date of filing: 07.12.2010
(51) Int. Cl.: H04W 4/22

(54) **Emergency communication using images**

(71) Applicant: Research In Motion Limited, Waterloo, ON N2L 3W8 (CA)
(72) Inventor: Lane, Christopher, Andrew, Waterloo Ontario N2L 5R9 (CA); Mercea, Cornel, Waterloo Ontario N2L 5R9 (CA)
(74) Representative: MERH-IP Matias Erny Reichl Hoffmann

(57) **Abstract**

There are disclosed methods that enable a user in an emergency situation to capture an image (such as a picture image or a video image) and transmit the image to an emergency authority (such as a PSAP) and/or to another party. In some embodiments, these operations can be performed while the user equipment (30) and/or a Universal Integrated Circuit Card (68) (UICC) inserted into the user equipment (30) are in a locked condition. Devices and systems are also disclosed for performing the methods, as well as a computer-readable medium having instructions stored thereon that, when executed, perform the methods.

## Description

The application relates to emergency communication from user equipment, such as a mobile telephone.

When a user dials an emergency number, such as "911", "112", or "999", from his or her user equipment (UE), a special control message is transmitted from the UE to the network indicating an emergency voice call. The network routes the call to an emergency response center, usually called the Public Safety Answering Point (PSAP), and a connection is established between the PSAP and the user. The user can then converse with the operator at the PSAP.

Typically, a user is able to initiate an emergency voice call without having to unlock the device and/or unlock a Universal Integrated Circuit Card (UICC) inserted into the UE. For example, if the UE or the UICC is in a locked condition, in an emergency situation a user does not have to enter the password to unlock the UE or the UICC, but can instead simply request an emergency voice call using, for example, a menu, a 'red button', or another shortcut on the UE. Upon such a request, the UE will initiate the emergency voice call.

In general, there are disclosed methods that enable user equipment (UE) in an emergency situation to capture an image (such as a picture image or a video image) and transmit the image to the PSAP or another party. In some embodiments disclosed herein, the UE is able to perform these operations irrespective of whether the UE is in a locked condition. Devices and systems are also disclosed for performing the methods, as well as a computer-readable medium having instructions stored thereon that, when executed, perform the methods.

In one aspect, there is provided a method in a user equipment, the method comprising:
receiving a request to initiate an emergency communication;
enabling an image capture device on the user equipment; and
upon capture of an image by the image capture device, the user equipment transmitting the image;
wherein the image capture device is enabled and the image is transmitted irrespective of whether the user equipment is in a locked condition.

In one embodiment, receiving the request to initiate the emergency communication comprises receiving the request at a user-interface of the user equipment, and the method further comprises the user equipment enabling the image capture device to capture the image upon receiving the request to initiate the emergency communication irrespective of whether the user equipment is in the locked condition.

In another embodiment, receiving the request to initiate the emergency communication comprises receiving the request when at least one of the user equipment and a Universal Integrated Circuit Card inserted into the user equipment is in the locked condition.

In yet another embodiment, the method further comprises:
receiving an initial input at the user-interface of the user equipment while in the locked condition;
providing a message at the user-interface, the message including a first option to unlock the locked condition by inputting a password and a second option to request the initiation of the emergency communication.

In still another embodiment, the method further comprises:
prior to enabling the image capture device to capture the image, providing another message at the user-interface, the another message requesting confirmation that there is an emergency;
performing the enabling of the image capture device to capture the image subsequent to receiving at the user-interface an input confirming the emergency.

In another embodiment, the method further comprises receiving a trigger to perform the transmitting, the trigger comprising the capture of the image.

In another aspect, there is provided a user equipment comprising:
a lock for locking the user equipment;
an image capture device;
an emergency communication handler that, responsive to receiving a request to initiate an emergency communication, enables the image capture device to capture an image, and controls the user equipment to transmit the captured image, irrespective of whether the user equipment is in a locked condition.

In one embodiment, the user equipment further comprises a housing for receiving a Universal Integrated Circuit Card in the user equipment; and the lock is further configured for locking the Universal Integrated Circuit Card when inserted into the user equipment, and the emergency communication handler is further configured to perform enabling of the image capture device to capture the image and controlling of the user equipment to transmit the captured image, irrespective of whether the user equipment or the Universal Integrated Circuit Card, when inserted into the user equipment, is in the locked condition.

In another embodiment, the user equipment further comprises a user-interface for receiving the request to initiate the emergency communication, and wherein if in the locked condition upon receiving the request to initiate the emergency communication, the emergency communication handler is further configured to maintain the locked condition while performing enabling of the image capture device to capture the image and controlling of the user equipment to transmit the captured image.

In yet another embodiment, the emergency communication handler is further configured to, prior to enabling the image capture device upon receiving the request to initiate the emergency communication, provide a message at the user-interface, the message requesting confirmation that there is an emergency.

In still another embodiment, the emergency communication handler is further configured to use the capture of the image as a trigger to transmit the image.

In another aspect, there is provided a method in a user equipment, the method comprising:
receiving a request to initiate an emergency communication when at least one of the user equipment and a Universal Integrated Circuit Card inserted into the user equipment is in a locked condition;
enabling an image capture device on the user equipment; and
upon capture of an image by the image capture device, the user equipment transmitting the image to a network component.

In one embodiment, the receiving the request to initiate the emergency communication comprises receiving the request at a user-interface of the user equipment, and the method further comprises the user equipment enabling the image capture device to capture the image upon said receiving the request to initiate the emergency communication.

In another embodiment, the method further comprises:
receiving an initial input at the user-interface of the user equipment while in the locked condition;
providing a message at the user-interface, the message including a first option to unlock the locked condition by inputting a password and a second option to request the initiation of the emergency communication.

In yet another embodiment, the method further comprises:
prior to said enabling the image capture device to capture the image, providing another message at the user-interface, the another message requesting confirmation that there is an emergency;
performing said enabling the image capture device to capture the image subsequent to receiving at the user-interface an input confirming the emergency.

In still another embodiment, the method further comprises the user equipment beginning to obtain information pertaining to the physical location of the user equipment upon receiving the request to initiate the emergency communication.

In another embodiment, the image is a picture or a video image.

In yet another embodiment, the method further comprises transmitting, along with the image, a date and time at which the image was captured and an identification of the user equipment.

In still another embodiment, the method further comprises:
obtaining information pertaining to the physical location of the user equipment;
if the information pertaining to the physical location of the user equipment is obtained prior to transmitting the image, automatically transmitting the information pertaining to the physical location of the user equipment along with the image;
if the information pertaining to the physical location of the user equipment is not obtained prior to transmitting the image, automatically transmitting the information pertaining to the physical location of the user equipment at a later time to the network component.

In another embodiment, the method further comprises receiving a trigger to perform the transmitting the image to a network component, the trigger comprising the capture of the image.

In another aspect, there is provided user equipment comprising:
a wireless access radio and at least one antenna;
a housing for receiving a Universal Integrated Circuit Card in the user equipment;
a lock for locking at least one of the user equipment and a Universal Integrated Circuit Card inserted into the user equipment;
an image capture device;
an emergency communication handler that, responsive to receiving a request to initiate an emergency communication when at least one of the user equipment and the Universal Integrated Circuit Card inserted into the user equipment is locked, enables the image capture device to capture an image, and controls the user equipment to transmit the captured image to a network component.

In one embodiment, the user equipment further comprises a user-interface for receiving the request to initiate the emergency communication; and the emergency communication handler is further configured to enable the image capture device upon receiving the request to initiate the emergency communication.

In another embodiment, the emergency communication handler is further configured to maintain at least one of the user equipment and the Universal Integrated Circuit Card inserted into the user equipment in a locked condition upon said receiving the request to initiate the emergency communication.

In yet another embodiment, the emergency communication handler is further configured to, prior to said enabling the image capture device upon said receiving the request to initiate the emergency communication, provide a message at the user-interface, the message requesting confirmation that there is an emergency.

In still another embodiment, the user equipment further comprises a user equipment locator that begins to obtain information pertaining to the physical location of the user equipment upon the user equipment receiving the request to initiate the emergency communication.

In another embodiment, the emergency communication handler is further configured to obtain a date and time at which the image was captured and control the user equipment to transmit the date, the time, and an identity of the user equipment along with the image.

In yet another embodiment, the emergency communication handler is further configured for:
if the information pertaining to the physical location of the user equipment is obtained prior to transmitting the image, controlling the user equipment to automatically transmit the information pertaining to the physical location of the user equipment along with the image;
if the information pertaining to the physical location of the user equipment is not obtained prior to transmitting the image, controlling the user equipment to automatically transmit the information pertaining to the physical location of the user equipment at a later time to the network component.

In still another embodiment, the emergency communication handler is further configured to use the capture of the image as a trigger to transmit the image.

In another aspect, there is provided a user equipment comprising:
an image capture device;
an emergency communication handler that, responsive to receiving a request to initiate an emergency communication, enables the image capture device to capture an image, and controls the user equipment to transmit the captured image, irrespective of whether the user equipment is in a locked condition.

In one embodiment, the emergency communication handler bypasses the locked condition when the UE is in the locked condition.

In another embodiment, the user equipment is adapted to have inserted, in use, a Universal Integrated Circuit Card, and the emergency communication handler is further configured to perform enabling of the image capture device to capture the image and controlling of the user equipment to transmit the captured image, even if at least one of the user equipment and the Universal Integrated Circuit Card is in the locked condition.

In another aspect, there is provided a computer-readable medium having stored thereon computer-readable instructions for performing any of the methods described above.

Embodiments of the present application will be described, by way of example only, with reference to the accompanying figures wherein:
FIG. 1 is a block diagram of cells in a cellular network;
FIG. 2 is a block diagram of a network connecting user equipment to a PSAP;
FIG. 3 is an embodiment of user equipment that can be used to implement some embodiments of the present application;
FIG. 4 is a flow diagram of a method for initiating an emergency communication and transmitting a captured image;
FIG. 5 is a flow diagram of another method for initiating an emergency communication and transmitting a captured image; and
FIG. 6 is an embodiment of a mobile device that may be used to implement some embodiments of the present application.

Like reference numerals may be used in different figures to denote similar elements.

There are disclosed methods that enable user equipment (UE) in an emergency situation to capture an image (such as a picture image or a video image) and transmit the image to the PSAP or another party. Advantageously, in some embodiments disclosed herein, the UE is able to perform these operations irrespective of whether the UE is in a locked condition. Devices and systems are also disclosed for performing the methods, as well as a computer-readable medium having instructions stored thereon that, when executed, perform the methods.

For illustrative purposes, embodiments will now be explained in greater detail below in conjunction with the figures.

The embodiments set forth below represent the necessary information to enable those skilled in the art to practice the claimed subject matter and illustrate the best mode of practicing such subject matter. Upon reading the following description in light of the accompanying figures, those skilled in the art will understand the concepts of the claimed subject matter and will recognize applications of these concepts not particularly addressed herein. It should be understood that these concepts and applications fall within the scope of the disclosure and the accompanying claims.

Moreover, it will be appreciated that that any module, component, or device exemplified herein that executes instructions may include or otherwise have access to computer readable storage medium or media for storage of information, such as computer readable instructions, data structures, program modules, or other data. A non-exhaustive list of examples of computer readable storage media include magnetic cassettes, magnetic tape, magnetic disk storage or other magnetic storage devices, optical disks such as CD-ROM, digital versatile disks (DVD) or other optical storage, volatile and non-volatile, removable and non-removable media implemented in any method or technology, RAM, ROM, EEPROM, flash memory or other memory technology. Any such computer storage media may be part of the device or accessible or connectable thereto. Any application or module herein described may be implemented using computer readable/executable instructions that may be stored or otherwise held by such computer readable storage media.

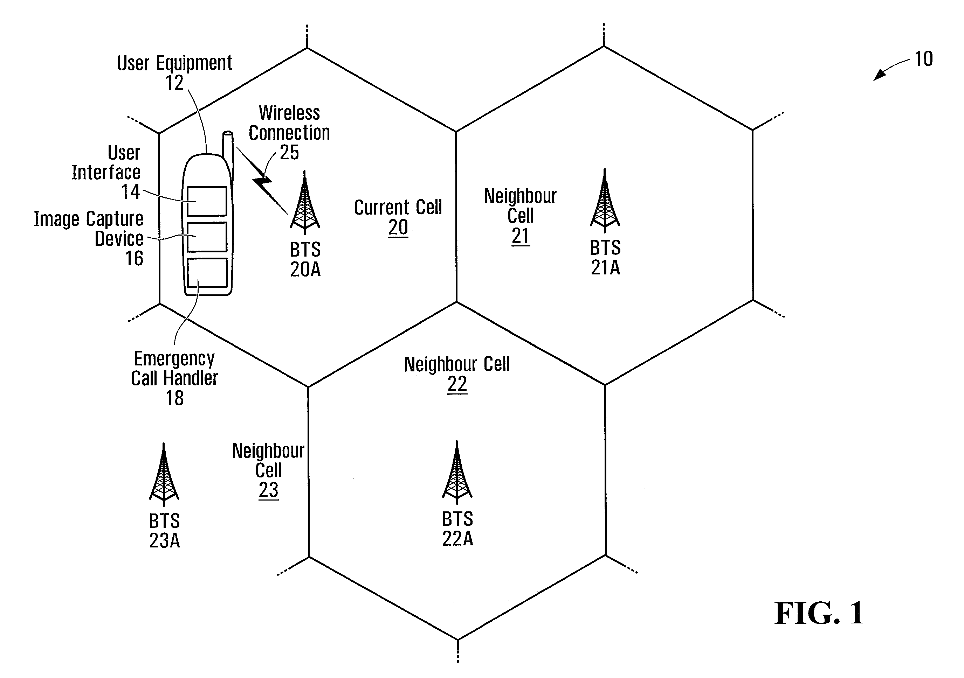

Referring now to FIG. 1, an embodiment is described in which a user equipment (UE) 12, such as a mobile device, is located in a cellular network 10.

The cellular network 10 comprises a plurality of cells 20, 21, 22, and 23. Each cell is served by a respective base transceiver station (BTS) 20A, 21A, 22A, and 23A. In FIG. 1, the UE 12 is located in the cell 20 and communicates with the BTS 20A via a wireless connection 25. As the UE 12 moves from the current cell 20 to a neighbouring cell (e.g. cell 23), a handoff method is performed to allow the UE 12 to seamlessly switch from communicating with the BTS 20A to the BTS of the neighbouring cell (e.g. BTS 23A). The UE 12 includes a user-interface 14, an image capture device 16, and an Emergency Communication Handler 18. Examples of these and possible other components of a UE, such as UE 12, will be described in greater detail below.

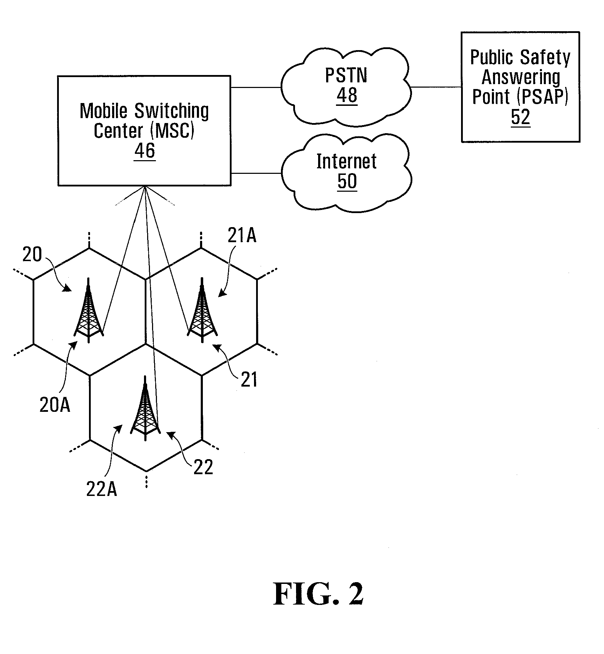

As shown in FIG. 2, each BTS in FIG. 1 is coupled to a Mobile Switching Center (MSC) 46, perhaps through a Base Station Controller (BSC) (not shown). The MSC 46 connects to the landline public switched telephone network (PSTN) 48 and the Internet 50. The PSTN 48 is connected to a local Public Safety Answering Point (PSAP) 52, which receives and processes emergency communications.

The descriptions of FIGs. 1 and 2 can be viewed as snapshots in time of the environment in which the UE 12 operates. Due to the mobility of the UE 12, this environment may change, and the UE 12 may move to be within the coverage area of a different set of cells (not shown). The UE 12 may move to be within a coverage area of a set of cells (not shown) that are configured to interact with a different PSAP than the PSAP 52 shown in Figure 2.

During operation, if a request is received at the UE 12 to initiate an emergency communication, a special control message is transmitted from the UE 12 to the serving BTS (e.g. BTS 20A). The serving BTS informs the MSC (e.g. MSC 46), and the call is routed through the PSTN (e.g. PSTN 48) to the PSAP (e.g. PSAP 52). A connection is established between the PSAP and the UE 12. Known procedures are used to mitigate the risk of the communication being dropped by the cellular network 10.

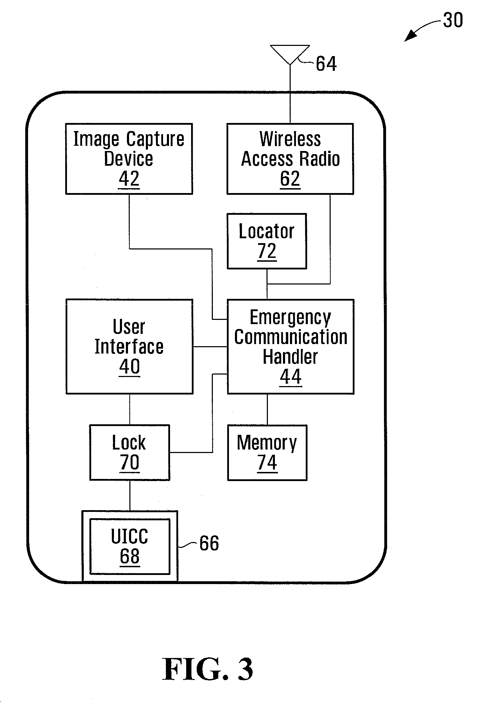

FIG. 3 shows in greater detail an embodiment of an UE 30. It will be appreciated that not all components illustrated and described in the UE 30 are required in order to perform the methods described below. It will also be appreciated that other components of the UE 30 may also be present, but have been omitted for the sake of clarity. The UE 30, may be, for example, the UE 12 of FIGs. 1 and 2.

The embodiment of the UE 30 shown in FIG. 3 includes a wireless access radio 62 and at least one antenna 64 for communicating with the network via a BTS, such as BTS 20A.

The UE 30 is adapted to have inserted, in use, a Universal Integrated Circuit Card (UICC) 68. For example, the UE 30 can include a housing 66 for receiving the UICC 68. UICCs are known in the art and are sometimes referred to as Subscriber Identity Module (SIM) cards. A UICC typically contains a unique number of the mobile user (IMSI), security authentication and ciphering information, temporary information related to the local network, a list of the services the user has access to, and password(s) for unlocking. Occasionally, a UICC in a GSM system may sometimes be referred to as a SIM card, whereas a UICC in a UMTS system may sometimes be referred to as a UICC or a USIM card, and a UICC in a CDMA system may sometimes be referred to as a Removable-User Identity Module (R-UIM). However, as used herein, "Universal Integrated Circuit Card" or UICC encompasses SIM, ISIM, and USIM cards, and R-UlMs, as well as any other cards (whether they be removable or non-removable, or locked or not locked to the UE 30) or modules in the UE 30 that perform equivalent functionality.

The UE 30 in the embodiment in FIG. 3 further includes a user-interface 40. The user-interface 40 is an interface that enables interaction between the user and the UE 30. For example, the user-interface may include a display (touch screen or not), a keyboard, a speaker, and/or a microphone for receiving voice commands. It will be appreciated that these are only specific examples.

The UE 30 further includes an image capture device 42. An example of an image capture device 42 is a camera. In one illustrated embodiment, the image capture device 42 is a camera having the ability to capture a photograph (i.e. a still image) or a video (i.e. video images). It will be appreciated that in some embodiments the image capture device 42 may only be configured to capture photographs for an emergency communication, not video, or vice-versa. Additionally, it will be appreciated that the term "image" as used herein is meant to encompass both a still image (i.e. a photograph) or a video image (i.e. an image or frame in a video being captured).

The UE 30 in the embodiment in FIG. 3 further includes a lock 70 for enabling locking and unlocking of the UE 30 and/or the UICC 68. In one embodiment, the UE 30 is configured to enter a locked condition upon a prompt by the user at the user-interface 40. In another embodiment, the UE 30 is configured to enter a locked condition automatically after a predetermined period of inactivity at the user-interface 40. When the UE 30 is in this locked condition, the user of the UE 30 has very limited access to applications available on the UE 30 and information stored on the UE 30. Additionally, when the UE 30 is in a locked condition, if an initial input is received at the user-interface 40, a message is provided to the user at the user-interface 40 including an option to unlock the UE 30. The user enters a password to cause the UE 30 to exit the locked condition and thereby gain full access to the information and applications available to the user on the UE 30. Similarly, the UICC 68 can also be configured to enter a locked condition. As an example, in such a scenario, upon powering on the UE 30, the user is prompted at the user-interface 40 to enter a password to unlock the UICC 68. The lock 70 is, for example, functionality implemented in one or more of hardware, firmware, or software in combination with a processor to run the software, that enables locking (entering a locked condition) and unlocking (exiting the locked condition) for the UE 30 and the UICC 68. For example the lock 70 may be a module or application comprising instructions stored on hardware, firmware, or any other computer-readable medium that, when executed by a processing unit, perform the locking and unlocking functions described herein.

The UE 30 in the embodiment of FIG. 3 further includes a user equipment locator 72. The purpose of the locator 72 is to obtain information pertaining to the physical location of the UE 30. It will be appreciated that there are many techniques known in the art that can be used to obtain such information. For example, the locator can obtain this information by communicating with GPS satellites to determine its GPS coordinates. In general, the technique for determining the physical location of the UE 30 can be network-based, handset-based, or a hybrid of the two. As another example, the locator 72 can implement Assisted-GPS (A-GPS), as known in the art, which uses both radio signals from satellites and network resources (such as, for example, an assistance server).

The UE 30 in the embodiment of FIG. 3 further includes a memory 74. In some alternative embodiments described later, the memory 74 can store a predetermined address to which the captured image is transmitted in an emergency communication.

Finally, the UE 30 also includes an Emergency Communication Handler 44. The functionality of the Emergency Communication Handler 44 will become clear as explained in relation to the embodiments described below. For example, in one embodiment, the Emergency Communication Handler 44, in response to the request to initiate an emergency communication, enables the image capture device 42 to capture an image, and controls the UE 30 to transmit the captured image, irrespective of whether the UE 30 is in a locked condition. In another embodiment, the Emergency Communication Handler 44, in response to the request to initiate an emergency communication when at least one of the UE 30 and the UICC 68 is locked, enables the image capture device 42 to capture an image, and controls the UE to transmit the captured image to a network component of the cellular network 10.

The Emergency Communication Handler 44 can be, for example, functionality implemented in one or more of hardware, firmware, or software in combination with a processor to run the software. For example the Emergency Communication Handler 44 may be a module or application comprising instructions stored on hardware, firmware, or any other computer-readable medium that, when executed by a processing unit, perform the functions of the Emergency Communication Handler 44 described herein.

It will be appreciated that not all of the components described in FIG. 3 are required to implement some of the embodiments described below, and that other components of the UE 30 have been purposely omitted for clarity.

As explained above, when at least one of the UE 30 and a UICC 68 inserted into the UE 30 is in a locked condition, a password is required to exit this locked condition and enable full access to the applications available to the user. However, there may be situations in which a user of the UE 30 wishes to initiate an emergency communication to the PSAP, capture an image, and transmit the image to the PSAP or another party over the network. In such a situation, the user may not have the ability, time, or desire to first initiate an emergency voice call. Additionally, if the UE 30 or the UICC 68 is in a locked condition, the user may not have the time or ability to enter the password to exit the locked condition. Moreover, the user may not have prior knowledge of how to transmit the image to the PSAP.

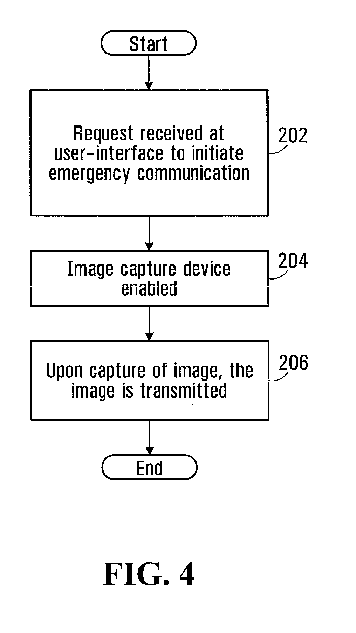

With reference to FIG. 4, one method is provided for enabling capture and transmission of an image in an emergency situation. It will be appreciated that, as used herein, an "emergency situation" is a situation in which the UE performs the methods described herein in response to receiving a request to initiate an emergency communication. Whether or not one would consider the situation to be an actual emergency is immaterial.

The method of FIG. 4 is described with reference to the UE 30 shown in FIG. 3, but it will be appreciated that the method is not limited to such user equipment.

First, in step 202, a request is received at the UE 30 to initiate an emergency communication. For example, in one embodiment the request is received at the user-interface 40.

Once the request is received, the UE 30 sends a special control message to a network component (e.g. the BTS, BSC, MSC, etc.) requesting that the network establish a connection between the PSAP and the UE 30. The transmission of such a control message and establishing a connection between the PSAP and the UE 30 is performed in the same manner as is currently done when establishing an emergency voice call.

In step 204, the UE 30 enables the image capture device 42 on the UE 30. The user can then capture an image using the image capture device 42.

In step 206, upon capture of an image by the image capture device, the UE 30 transmits the image, for example, to a network component. Once the image is received at the network component, it is forwarded to the PSAP through the established connection. In some embodiments, the image may additionally or instead be forwarded to another party either related or unrelated to the PSAP.

It will be appreciated that in an alternative embodiment, the image and the control message indicating the emergency communication and requesting establishment of a connection between the PSAP and the UE 30 can be transmitted at the same time.

Steps 204 to 206 are performed irrespective of whether the UE 30 is in a locked condition. For example, it may be the case that in one scenario, the request to initiate the emergency communication is received when the UE 30 is in a locked condition, in another scenario the request is received when at least one of the UE 30 and a UICC 68 inserted into the UE 30 is in a locked condition, and in another scenario the request is received when the UE 30 is unlocked and the user has full access to the applications and information available to the user. Advantageously, the method steps in FIG. 4 proceed regardless. For example, if the UE 30 and/or UICC 68 is in a locked condition, the emergency communication handler 44 bypasses the locked condition to perform steps 204 to 206. Therefore, the method steps in FIG. 4 proceed even if at least one of the UE 30 and the UICC 68 is in a locked condition.

In one embodiment, upon receiving the request to initiate the emergency communication when at least one of the UE 30 and the UICC 68 is in a locked condition, the UE 30 automatically enables the image capture device 42 while still remaining in the locked condition as described above. In one such embodiment, the request to initiate the emergency communication triggers enablement of the image capture device 42.

Notably, in such embodiments, it is not necessary to exit the locked condition (e.g. by entering a password), and therefore any user, including a user that does not know the password to unlock the UE 30 or UICC 68, is able to quickly and conveniently initiate the emergency communication, capture the image, and have it forwarded to the PSAP. The UE 30 will remain in its locked condition. This is similar to conventional emergency voice calls, in which the call can be made while the UE 30 and/or the UICC 68 are locked. The captured image is automatically routed by the network in the same way voice data is automatically routed in an emergency voice call.

In another embodiment, in step 206 the UE 30 also automatically transmits the image upon its capture. Therefore, advantageously, it is not necessary for the user to have prior knowledge of how to transmit the captured image to the PSAP, as the image is automatically transmitted to the network component, and it is then automatically routed to the PSAP once received by the network component, the same way voice data is automatically routed in an emergency call. In one such embodiment, once the image capture device 42 completes capturing the image (e.g. once the photograph is taken or once the user has indicated to stop recording the video), this acts as a trigger for the UE 30 to transmit the image or series of images captured. In another embodiment, if a video is being captured, the UE 30 is triggered to transmit each captured image of the video (i.e. each "frame") in real time as it is captured.

It will be appreciated that it is not necessary for there to be a UICC 68 present in order to establish the emergency communication. For example, in one scenario with respect to FIG. 4, it may be the case that the UE 30 is locked when the request is received to initiate the emergency communication and no UICC 68 is inserted into the UE 30, or perhaps the UE 30 does not even have a UICC 68. The method will still proceed as described in FIG .4. Similarly, in other embodiments the UE 30 may not be able to enter a locked condition, only the UICC 68. Therefore, in such an embodiment, it may be the case that the UICC 68 is in a locked condition when the request to initiate the emergency communication is received and that the UE 30 is not or cannot be. The method of FIG. 4 will still proceed as described.

In yet another embodiment, each captured image (whether picture or video) is also stored locally in memory 74 on the UE 30.

The Emergency Communication Handler 44 is configured to enable the operations described above. For example, it is the Emergency Communication Handler 44 that, responsive to receiving the request to initiate the emergency communication, enables the image capture device 42 to capture the image, and controls the UE 30 to transmit the captured image to the network component using, for example, the wireless access radio 62.

In some embodiments, the locator 72 begins to obtain information pertaining to the physical location of the UE 30 upon the UE 30 receiving the request to initiate the emergency communication. This is coordinated by the Emergency Communication Handler 44. Once the location information is obtained, the Emergency Communication Handler 44 controls the UE 30 to automatically transmit the location information along with the captured image. It may be the case, however, that the locator 72 is not able to obtain the location information prior to transmission of the captured image. In this case, once the location information is available at a later time, the Emergency Communication Handler 44 automatically controls the UE 30 to transmit it to the network component to be routed to the PSAP or other party.

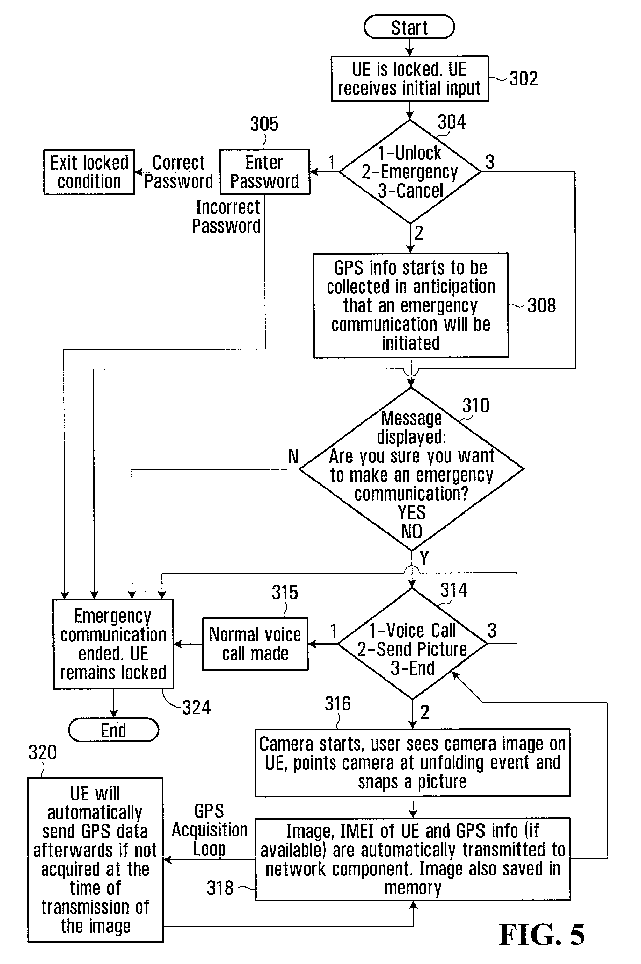

Other embodiments exemplifying additional and alternative functionality are disclosed below with reference to FIG. 5. As with the embodiments described above, the embodiments described below will be described with reference to the UE 30 shown in FIG. 3, but it will be appreciated that these embodiments are not limited to such user equipment.

Turning therefore to FIG. 5, an embodiment is illustrated in which the UE 30 begins in a locked condition.

First, in step 302, the UE 30 is locked and an initial input is received at the user-interface 40 of the UE 30. In step 304, a message is provided at the user-interface 40 including an option to unlock the device by entering a password, an option to initiate an emergency communication, and an option to cancel. If 'unlock' is selected, the method proceeds to step 305. If 'cancel' is selected, the method proceeds to step 324. If 'emergency' is selected, the method proceeds to step 306.

If 'unlock' is selected, in step 305 the UE 30 provides a message at the user-interface 40 requesting that the user enter a password to unlock the UE 30. If the user enters the correct password, the method proceeds to step 306 in which the UE 30 exits the locked condition and the user is granted full access to the applications and information on the UE 30 available to the user. If the user enters the incorrect password, the method proceeds to step 324.

If 'emergency' is selected, in step 308 the Emergency Communication Handler 44 instructs the locator 72 to begin collecting GPS information in anticipation that an emergency communication will be initiated. In step 310, another message is provided at the user-interface 40 requesting confirmation that there is an emergency (i.e. that the user indeed wants to make the emergency communication). The user selects 'YES' or 'NO', If 'NO' is selected, the method jumps to step 324. If 'YES' is selected, the Emergency Communication Handler 44 receives this as a confirmation of the emergency and the emergency communication.

In step 314, a message is provided to the user-interface 40 including an option to initiate a voice call, an option to send a picture, and an option to end. In the embodiment illustrated in FIG. 5, it is assumed that the image capture device 42 is a camera, and that only a picture can be transmitted. It will be appreciated, however, that this is only one specific example, and that video images could instead or additionally be captured and transmitted. For example, the menu shown at the user-interface 40 in step 314 may include a fourth option to capture and send a video.

If the user selects voice call, the method proceeds to step 315 and an emergency voice communication is enabled as is known in the art. If the user selects 'end', then the method proceeds to step 324. If the user selects 'send picture', then the method proceeds to step 316. Although not shown in FIG. 5, in an alternative embodiment, if the user does not make a selection at step 314, the method proceeds to step 315 after a predetermined period of time (e.g. within 5 to 10 second). Advantageously, in this embodiment, a voice call will be initiated automatically in the absence of a user selection, which may happen, for example, if the user is panicking and does not realize there is a menu providing the options shown in step 314.

In step 316, the Emergency Communication Handler 44 enables the camera to capture a picture. The user sees the image to be captured with the camera on the display of the user-interface 40 and points at the unfolding event and snaps a picture.

In step 318, upon capture of the picture, the Emergency Communication Handler 44 controls the UE 30 to send a message to a network component of the network to establish an emergency communication with the PSAP, and the Emergency Communication Handler 44 controls the UE 30 to transmit the captured image to the network component to be routed to the PSAP. The network component may simply be the serving base station of the UE 30, or a higher level component in the network architecture, for example the Mobile Switching Center, which routes the communication. In an alternative embodiment, the Emergency Communication Handler 44 controls the UE 30 to send the message to the network component to establish the emergency communication prior to capturing the image, for example in step 316.

In step 318, the Emergency Communication Handler 44 also retrieves an identification of the UE 30, for example, the International Mobile Equipment Identity (IMEI) of the UE 30 and transmits this along with the captured picture. Additionally, if available, the Emergency Communication Handler 44 also transmits the GPS location data along with the picture. A date and timestamp may also be transmitted along with the captured picture. In one embodiment, the date, timestamp, and GPS location data is used to name the picture file being transmitted. Moreover, in some embodiments, the picture, date, timestamp, and location information is saved to memory 74 so that it is available for subsequent retrieval at a later time (not shown).

If the GPS data is not available, in step 320, the locator 72 continues to obtain the GPS data and the Emergency Communication Handler 44 automatically controls the wireless access radio 62 to transmit this location data at a later time (possibly with IMEI, date and time information) once the location data becomes available. Meanwhile, the method returns to step 314.

As mentioned above, if the user selects 'end' at step 314, the method proceeds to step 324. At step 324 the emergency communication ends. The UE 30 remains in its locked condition.

In the embodiment described with reference to FIG. 5, the captured image is a picture. In an alternative embodiment, a video is instead captured, and in such an embodiment, in steps 316 and 318, as each image in the stream of images making up the video is captured, each image is sent in the same manner as a picture, rather than storing the whole captured video and then transmitting it all at once. Each video image in the video can be transmitted with any or all of the date, time, identification, and location information, if desired.

In some of the embodiments described above, for example in the embodiment described with reference to FIG. 5, information pertaining to the physical location of the UE 30 is transmitted along with the captured image. However, it may be the case that precise location information, such as the position of the UE 30 using the Global Positioning System (GPS), has not yet been obtained at the time the captured image is ready to be transmitted to the network component. If this is the case, in one embodiment, the Emergency Communication Handler 44 instead transmits other location data that can be more quickly obtained by the locator 72, such as radiolocation data from the cellular network 10 (e.g. tower triangulation data using radio towers) or Assisted-GPS (A-GPS) information. This location data may not be as precise as the position using GPS, but it is still useful. In one such embodiment, the GPS location data is then sent at a later time once it has been obtained. For example, in the embodiment described in FIG. 5, if the GPS location data is not yet obtained in step 318, any other location data that has been obtained (e.g. A-GPS data) is transmitted along with the captured image. Then, in step 320, the GPS data is sent at a later time once it has been obtained by the locator 72. If at the later time there is no network connection available, the Emergency Communication Handler 44 controls the UE 30 to automatically transmit the GPS data once a network connection becomes available.

In another embodiment, the Emergency Communication Handler 44 controls the locator 72 to obtain location information at least once during a predetermined period of time subsequent to the transmission of the image. The Emergency Communication Handler 44 then controls the UE 30 to automatically transmit this location information to the network component to be forwarded to the PSAP. This allows the PSAP to track the movement of the UE 30 subsequent to the transmission of the image.

In some embodiments audio data can be additionally captured and transmitted along with the captured image, particularly if the captured image is a picture, since a captured video typically includes audio. For example, in a variation of the embodiment shown in FIG. 5, in addition to enabling the camera, the Emergency Communication Handler 44 also automatically enables a microphone (not shown) on the UE 30 that captures audio data for a predetermined period of time (e.g. 10 seconds). Then, in step 318, both the captured picture and the audio are transmitted. This allows the user, for example, to provide additional relevant information pertaining to the picture (e.g. "photograph of robber leaving store ABC").

In the embodiments described above, the captured image is transmitted to the network component to be forwarded to the PSAP and/or perhaps to another party (e.g. related emergency authorities). In an alternative embodiment, a predetermined address is stored in the memory 74 of the UE 30. In one such embodiment, the predetermined address is the e-mail address of an emergency authority, such as the PSAP or the police. In this embodiment, the Emergency Communication Handler 44 is configured to automatically retrieve the predetermined address from memory and automatically email the image to the predetermined address. The predetermined address is preferably not modifiable by the user, but can be in some embodiments. Moreover, since the address of the emergency authority may change as the UE 30 roams, in one embodiment, an updated predetermined address is automatically transmitted to the UE 30 by the network as the UE 30 roams from one area to another. The Emergency Communication Handler 44 modifies the predetermined address stored in memory 74 as each updated predetermined address is received. In another embodiment, the predetermined address is an email address of the police, and when such emails are received by the police, a software program at the police station can sort the emails by date, location, and identification of the device, and use the location information to display on a map the location of the UE 30. In another embodiment, the user is able to input into memory 74 via user-interface 40 additional or alternative addresses to which the captured image is to be sent. In yet another embodiment, the predetermined address can be displayed at the user-interface 40 while the user is capturing the image.

The embodiments described above are particularly advantageous in situations in which a user wishes to initiate an emergency communication, capture an image, and transmit the image when the user equipment or a UICC inserted into the user equipment is in a locked condition. However, it will be appreciated that embodiments described above can operate when both the user equipment and the UICC is unlocked. For example, in the embodiment illustrated in FIG. 5, if the UE 30 and UICC 68 are unlocked in step 302 and the user dials 911 or requests initiation of an emergency communication in some other way that may be available (e.g. by selecting a shortcut on a menu of the UE 30 or by pressing a 'red button' on the UE 30), the method automatically jumps to step 308, and steps 310-312 may or may not be omitted.

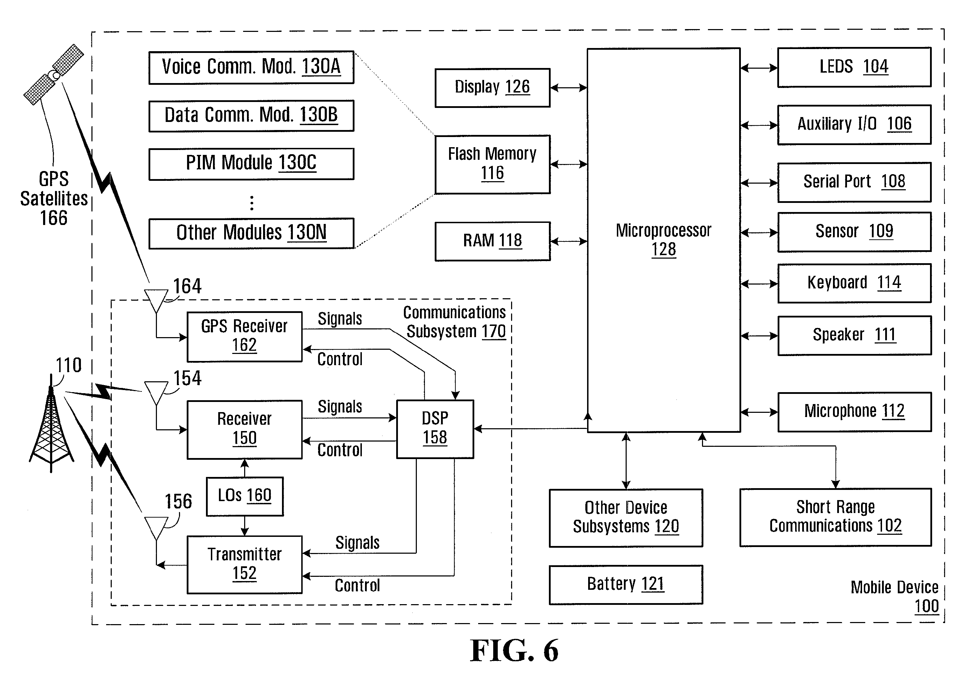

Referring now to FIG. 6, shown is a block diagram of an embodiment of another user equipment, a mobile device 100, that may implement any of the device methods described herein. The mobile device 100 is shown with specific components for implementing features similar to those of the UE 30 shown in FIGS. 1-3. It is to be understood that the mobile device 100 is shown with very specific details for exemplary purposes only.

The mobile device 100 has a housing that may be elongated vertically, or may take on other sizes and shapes (including clamshell housing structure) The keyboard 114 may include a mode selection key, or other hardware or software for switching between text entry and telephony entry. Alternatively, the mobile device 100 may have a housing that does not take on other sizes and shapes.

A microprocessor 128 is shown schematically as coupled between a keyboard 114 and a display 126. The microprocessor 128 controls operation of the display 126, as well as overall operation of the mobile device 100, in response to actuation of keys on the keyboard 114 by a user.

In addition to the microprocessor 128, other parts of the mobile device 100 are shown schematically. These include: a communications subsystem 170; a short-range communications subsystem 102; the keyboard 114 and the display 126, along with other input/output devices including a set of LEDs 104, a set of auxiliary I/O devices 106, a serial port 108, a speaker 111 and a microphone 112; as well as memory devices including a flash memory 116 and a Random Access Memory (RAM) 118; and various other device subsystems 120. The keyboard 114, speaker 111, microphone 112, display 126, and LEDs 104 are part of the user-interface.

The mobile device 100 may have a battery 121 to power the active elements of the mobile device 100. The mobile device 100 is in some embodiments a two-way radio frequency (RF) communication device having voice and data communication capabilities. In addition, the mobile device 100 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device 100 may also be stored to the RAM 118.

The microprocessor 128, in addition to its operating system functions, enables execution of software applications on the mobile device 100. A predetermined set of software applications that control basic device operations, such as a voice communications module 130A and a data communications module 130B, may be installed on the mobile device 100 during manufacture. In addition, a personal information manager (PIM) application module 130C may also be installed on the mobile device 100 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system.

Additional software modules, illustrated as another software module 130N, may be installed during manufacture. The software modules may, for example, include one or more modules that control the execution of the methods described with reference to FIGs. 4 and 5, or implement one or more of the applications described with reference to FIG. 3, such as the lock 70, and the Emergency Communication Handler 44.

It will be appreciated that the implementations described with reference to FIG. 6 are very specific for exemplary purposes. For example, alternative implementations are possible in which the methods described with reference to FIGs. 4 and 5 are not implemented as software and stored on the flash memory 116. More generally, the methods described with reference to FIGs. 4 and 5 may be implemented as software running on appropriate hardware, hardware, firmware, or any appropriate combination thereof.

Communication functions, including data and voice communications, are performed through the communication subsystem 170, and possibly through the short-range communications subsystem 102. The communication subsystem 170 includes a receiver 150, a transmitter 152, a GPS receiver 162, and one or more antennas, illustrated as a receive antenna 154, a transmit antenna 156, and a GPS antenna 164. In addition, the communication subsystem 170 also includes a processing module, such as a digital signal processor (DSP) 158, and local oscillators (LOs) 160.

The specific design and implementation of the communication subsystem 170 is dependent upon the communication network in which the mobile device 100 is intended to operate. For example, the communication subsystem 170 of the mobile device 100 may be designed to operate with the Mobitex^{TM}, DataTAC^{TM} or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Examples of CDMA include 1X and 1x EV-DO. The communication subsystem 170 may also be designed to operate with an 802.11 Wi-Fi network, and/or an 802.16 WiMAX network. Other types of data and voice networks, both separate and integrated, may also be utilized with the mobile device 100.

Network access may vary depending upon the type of communication system. For example, in the Mobitex^{TM} and DataTAC^{TM} networks, mobile devices are registered on the network using a unique Personal Identification Number (PIN) associated with each device. In GPRS networks, however, network access is typically associated with a subscriber or user of a device. A GPRS device therefore typically has a subscriber identity module, (often referred to as a SIM card), in order to operate on a GPRS network.

The network described in each of the embodiments of FIGS. 1-5 can, as an example, be any of the communication networks referenced above, designated as communication network 110 in FIG. 6.

When network registration or activation procedures have been completed, the mobile device 100 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150, the transmitter 152, and the GPS receiver 162. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the mobile device 100. In addition, the display 126 may also be utilized in voice communication mode, for example, to display the identity of a calling party, the duration of a voice call, or other voice call related information.

Location determination using GPS technology involves receiving GPS signals from GPS satellites 166 on the antenna 164. The GPS signals are received using the GPS receiver 162 and processed by the DSP 158. Typically, GPS signals from at least four satellites are processed. Further details of GPS are known in the art and are omitted for simplicity.

The short-range communications subsystem 102 enables communication between the mobile device 100 and other proximate systems or devices, which need not necessarily be similar devices. For example, the short range communications subsystem may include an infrared device and associated circuits and components, or a Bluetooth^{TM} communication module to provide for communication with similarly-enabled systems and devices.

As an example, in the embodiments described with reference to FIG. 6, the communications subsystem 170 can perform functionality equivalent to the wireless access radio 62 and locator 72 of FIG. 3; the keyboard 114, speaker 111, microphone 112, display 126, and LEDs 104 are part of a user-interface that can perform functionality equivalent to the user-interface 40 of FIG. 3; and the other modules 130N in FIG. 6 can implement functionality equivalent to the lock 70 and the Emergency Communication Handler 44 of FIG. 3.

Although the foregoing has been described with reference to certain specific embodiments, various modifications thereof will be apparent to those skilled in the art without departing from the scope of the claims appended hereto.

## Claims

1. A method in a user equipment (30), the method comprising:
receiving a request to initiate an emergency communication;
enabling an image capture device (42) on the user equipment (30); and
upon capture of an image by the image capture device (42), the user equipment (30) transmitting the image;
wherein the image capture device (42) is enabled and the image is transmitted irrespective of whether the user equipment (30) is in a locked condition.

2. The method of claim 1 wherein said receiving the request to initiate the emergency communication comprises receiving the request at a user-interface (40) of the user equipment (30), and the method further comprises the user equipment (30) enabling the image capture device (42) to capture the image upon said receiving the request to initiate the emergency communication irrespective of whether the user equipment (30) is in the locked condition.

3. The method of claim 2 wherein said receiving the request to initiate the emergency communication comprises receiving the request when at least one of the user equipment (30) and a Universal Integrated Circuit Card (68) inserted into the user equipment (30) is in the locked condition.

4. The method of claim 2 or claim 3, the method further comprising:
receiving an initial input at the user-interface (40) of the user equipment (30) while in the locked condition;
providing a message at the user-interface (40), the message including a first option to unlock the locked condition by inputting a password and a second option to request the initiation of the emergency communication.

5. The method of any one of claims 2 to 4, the method further comprising:
prior to said enabling the image capture device (42) to capture the image, providing a message at the user-interface (40) requesting confirmation that there is an emergency;
performing said enabling the image capture device (42) to capture the image subsequent to receiving at the user-interface (40) an input confirming the emergency.

6. The method of any one of claims 1 to 5 wherein the image is a picture or a video image.

7. The method of any one of claims 1 to 6 further comprising receiving a trigger to perform said transmitting, the trigger comprising the capture of the image.

8. A user equipment (30) comprising:
an image capture device (42);
an emergency communication handler (44) that, responsive to receiving a request to initiate an emergency communication, enables the image capture device (42) to capture an image, and controls the user equipment (30) to transmit the captured image, irrespective of whether the user equipment (30) is in a locked condition.

9. The user equipment (30) of claim 8 wherein the emergency communication handler (44) bypasses the locked condition when the user equipment (30) is in the locked condition.

10. The user equipment (30) of claim 8 or claim 9 wherein the user equipment (30) is adapted to have inserted, in use, a Universal Integrated Circuit Card (68), and the emergency communication handler (44) is further configured to perform said enabling the image capture device (42) to capture the image and said controlling the user equipment (30) to transmit the captured image, even if at least one of the user equipment (30) and the Universal Integrated Circuit Card (68) is in the locked condition.

11. The user equipment (30) of any one of claims 8 to 10, the emergency communication handler (44) further configured to, prior to said enabling the image capture device (42) upon said receiving the request to initiate the emergency communication, provide a message at a user-interface (40), the message requesting confirmation that there is an emergency.

12. The user equipment (30) of any one of claims 8 to 11 wherein the image is a picture or a video image.

13. The user equipment (30) of any one of claims 8 to 12, the emergency communication handler (44) further configured to use the capture of the image as a trigger to transmit the image.

14. A computer-readable medium having stored thereon computer-readable instructions for handling an emergency communication in user equipment (30), the computer-readable instructions including instructions for performing operations comprising:
receiving a request to initiate the emergency communication;
enabling an image capture device (42) on the user equipment (30); and
upon capture of an image by the image capture device (42), transmitting the image;
wherein the image capture device (42) is enabled and the image is transmitted irrespective of whether the user equipment (30) is in a locked condition.

15. A computer-readable medium having stored thereon computer-readable instructions for performing the method of any one of claims 2 to 7.
